# FASCICULE DE BREVET EUROPEEN

(11) **EP 0 392 914 B1**
(45) Date de publication et mention de la délivrance du brevet: **22.03.1995**
(21) Numéro de dépôt: 90400969.3
(22) Date de dépôt: 10.04.1990
(51) Int. Cl.: B29C 70/08, F16L 9/12

(54) **Tube en matériau composite à revêtement thermoplastique fibré et procédé de fabrication d'un tel tube**
Rohr aus Verbundwerkstoff mit einer thermoplastischen faserigen Beschichtung und Verfahren zum Herstellen eines derartigen Rohres
Composite tube with a thermoplastic fiber coating and method for producing such a tube

(30) Priorité: 13.04.1989 FR 8904898
(43) Date de publication de la demande: 17.10.1990
(73) Titulaire: AEROSPATIALE Société Nationale Industrielle, 75781 Paris Cédex 16 (FR); INSTITUT FRANCAIS DU PETROLE, 92500 Rueil Malmaison (FR)
(72) Inventeur: Fuchs,Jean-François, F-33480 Sainte-Hélène (FR); Tisne Jean-Louis, F-33127 Martignas (FR); Odru Pierre, F-94120 Fontenay S/Bois (FR)
(74) Mandataire: Lhuillier, René

(56) Documents cités:
- EP-A- 0 133 340
- DE-A- 3 120 459
- FR-A- 2 570 888
- GB-A- 2 077 880
- US-A- 3 843 759
- US-A- 4 532 169

## Description

L'invention a pour objet un tube en matériau composite fibré avec liant thermodurcissable et concerne plus précisément un tube muni d'un revêtement intérieur thermoplastique fibré et son procédé de réalisation, notamment pour application aux tubes pétroliers de production fonctionnant à tout niveau de pression.

Dans ce domaine particulier les tubes utilisés sont habituellement réalisés par bobinage de fibres, par exemple en aramide, en verre, en carbone, enrobées de matrices thermodurcissables comme l'époxy. Pour être étanches à de hautes pressions internes de l'ordre de 350 bars en service, ces tubes doivent être revêtus intérieurement d'une couche de produit assurant l'étanchéité. Actuellement, les tubes composites sont pourvus d'un revêtement interne en élastomère, mais pour le transport de pétrole brut ou de gaz, celui-ci présente l'inconvénient majeur d'avoir une durée de vie généralement très limitée quand il est en présence de gaz tel que l'acide sulfhydrique H₂S, dont on sait qu'une proportion non négligeable peut se trouver dans les pétroles bruts. Il convient donc de remplacer ces revêtements élastomères actuellement connus par des matériaux qui ne sont pas ou qui sont peu sensibles aux effluents pétroliers et l'on retient pour cela, faute d'élastomères adéquats, les revêtements polyamides tels qu'indiqués dans le GB-A-2 077 880 qui sont thermoplastiques et qui doivent donc être mis en place sur la face interne d'un tube en matériau composite constitué de fibres liées par une matrice thermodurcissable.

Pour cette mise en place, une première solution consiste à rapporter une gaine de polyamide pur à l'intérieur du tube en matériau composite après que celui-ci ait été réalisé. Mais cette opération est bien difficile compte tenu de la longueur des tronçons de tube couramment utilisés dans le domaine pétrolier (jusqu'à une vingtaine de mètres), d'autant plus que cette gaine doit être parfaitement liée au composite structural. Par ailleurs, un apport de polyamide sous forme liquide ou de poudre est à proscrire compte tenu du fait qu'un tel procédé impose une mise en température de l'ordre de 200 °C qui est incompatible avec le support constitué du composite à matrice thermodurcissable. Enfin ce procédé nécessiterait un outillage d'apport du matériau thermoplastique d'une longueur au moins égale à la moitié de celle du tube.

Une seconde solution inverse de la précédente consiste à rapporter cette fois le tube au-dessus d'une gaine tubulaire en polyamide pur (par exemple du Rilsan°),préalablement enfilée sur un mandrin, par bobinage filamentaire de fibres (verre, aramide ou carbone) pour constituer ledit tube.

Ce procédé a deux inconvénients.

D'une part il est difficile d'enfiler un tube mince, donc fragile, sur un mandrin qui peut avoir une longueur de 15 mètres ou plus. D'autre part, en supposant qu'un procédé de collage soit suffisant pour lier la gaine polyamide au composite, il résulterait d'un tel procédé un état de contraintes résiduelles dans la gaine, tel que celle-ci serait particulièrement fragile en utilisation.

On connaît par ailleurs un procédé pour le renforcement d'un tuyau moulé en polymère thermoplastique qui consiste à assurer sur ce tuyau un enroulement d'une étoffe de renforcement formée d'une armature à filaments souples mais aussi de filaments également en polymère thermoplastique, puis à faire fusionner la face extérieure du tuyau avec ces filaments thermoplastiques de l'étoffe. Cette technique de renforcement applicable à l'extérieur, convient pour des tuyaux eux-mêmes en thermoplastique, mais n'est pas utilisable avec des composites thermodurcissables ne pouvant fusionner avec des filaments thermoplastiques.

L'invention vise à remédier aux inconvénients de ces techniques connues en ce qu'elle propose une solution permettant la mise en présence des matériaux thermodurcissables et des matériaux thermoplastiques garantissant le maintien sans décollement, du revêtement sur la structure mécaniquement résistante du tube en matériau composite, aussi bien lors de sa fabrication que de son utilisation dans des conditions d'application particulière comme évoqué précédemment.

Un premier objet de l'invention se rapporte donc à un tube en matériau composite constitué d'une couche interne en matériau thermoplastique et d'une partie structurale en fibres enrobées de matrices thermodurcissables jouant le rôle de liant, tube selon lequel la partie structurale tubulaire à liant thermodurcissable est pourvue :
- d'un premier revêtement interne en matériau composite fibré à liant thermoplastique dont les fibres d'interface sont étroitement liées par polymérisation au liant de la partie thermodurcissable de cette partie tubulaire et,
- au-dessous de ce premier revêtement interne, d'un second revêtement interne supplémentaire en matériau thermoplastique constitué de polyamide pur, soudé au liant thermoplastique dudit premier revêtement interne.

De même en prévoit que la partie structurale tubulaire à liant thermodurcissable est pourvue d'un revêtement extérieur en matériau composite fibré à liant thermoplastique, dont les fibres d'interface sont étroitement liées par polymérisation au liant de la partie thermodurcissable de cette partie tubulaire.

Un autre objet de la présente invention se rapporte au procédé de fabrication d'un tel tube en matériau composite, procédé selon lequel on effectue sur un mandrin tubulaire un enrubannage de film de polyamide suivi d'un bobinage de fibres imprégnées d'une matrice polyamide thermoplastique en assurant un chauffage pour le soudage de la matrice, puis on effectue à température ambiante au-dessus de cette couche un bobinage d'une partie structurale en fibres et résine thermodurcissable, et enfin on assure la polymérisation en température de la matrice thermodurcissable par mise en étuve de l'ensemble.

D'autres caractéristiques particulières et avantages de l'invention apparaîtront à la lecture de la description suivante d'une forme de réalisation faisant référence à la figure unique qui représente une vue schématique en coupe partielle d'un tube en matériau composite.

On a représenté sur la figure un tube essentiellement constitué d'une partie structurale 1 en fibres composites enrobées de matrices thermodurcissables jouant le rôle de liant et d'un revêtement interne 2 en matériau composite fibré obtenu par exemple par bobinage de fibres de verre, qui est imprégné d'un liant thermoplastique. Cette couche thermoplastique fibrée gardera après fabrication du tube ses dimensions de fabrication grâce à son armature de fibres. Cette couche 2 forme un revêtement tubulaire intérieur dont les fibres d'interface sont étroitement liées par polymérisation au liant de la partie thermodurcissable de la partie tubulaire 1 et se trouve être directement adjacente à la partie tubulaire formée de la partie structurale et résistant aux gaz issus des produits pétroliers et aux pressions importantes auxquelles il est soumis. Toutefois, quand il s'agit d'utilisations avec de très hautes pressions, de l'ordre de 500 bars, des mi- crofissurations peuvent se développer entre les fibres. Aussi le tube porte-t-il sur sa face interne, au-dessous de la couche 2, une couche supplémentaire 3 en matériau thermoplastique constituée de polyamide pur obtenue par enroulement, sur laquelle seront soudées les fibres imprégnées du même matériau thermoplastique constituant la couche 2 en thermoplastique fibré.

Selon une variante de réalisation, on pourrait réaliser aussi un revêtement externe en fibres polyamide bobinées. Ce revêtement extérieur 4 en matériau composite fibré à liant thermoplastique, dont les fibres d'interface sont étroitement liées par polymérisation au liant de la partie thermodurcissable de la partie tubulaire est donc placé directement au-dessus de la partie structurale 1 et facile à mettre en oeuvre même pour des tubes de grande longueur; il protège le composite structural 1 et améliore l'étanchéité à l'eau par l'extérieur. Ce revêtement 4 est donc favorable à de bonnes conditions de vieillissement du composite structural 1. Il constitue en outre une protection efficace contre les chocs.

Pour réaliser un tel tube on procède de la façon suivante :
Autour d'un mandrin tubulaire métallique central 5 d'axe 6, on assure un enrubannage du film de polyamide pur 3. Puis on effectue le bobinage, par dessus ce film, et à l'aide d'une machine à bobiner, de fibres 2 par exemple de fibres de verre imprégnées d'une matrice polyamide (thermoplastique). La cohésion des fibres stabilisant le revêtement est réalisée par chauffage et soudage du liant ou de la matrice thermoplastique. Avantageusement, on chauffe la fibre préalablement enduite d'une résine thermoplastique, au fur et à mesure de son enroulement sur le mandrin 5, lui-même chauffé et entraîné en rotation par une machine tournante. Le chauffage de la fibre enduite provoque le ramollissement de la résine qui se soude à la résine enduisant la fibre déjà déposée lors du tour précédent.

Ensuite et au-dessus de cette couche 2 ainsi obtenue, on assure le bobinage de la partie structurale 1 en fibres et résine thermodurcissable (par exemple en époxy) à température ambiante.

Enfin, on effectue le bobinage complémentaire de la couche 4 à l'aide de fibres, par exemple de Kevlar, imprégnées d'une matrice polyamide. Cette dernière opération s'effectue à nouveau par chauffage pour le soudage du liant thermoplastique.

Les bobinages étant terminés, on met l'ensemble en étuve pour assurer la polymérisation en température de la matière thermodurcissable. On notera que la polymérisation du thermodurcissable se fait à une température nettement inférieure à celle de la fusion de la couche thermoplastique 2. On indiquera à titre d'exemple que la température de fusion du thermoplastique est de 200 à 220 _{°} C tandis que la température de polymérisation du thermodurcissable se limite à 140_{°}C jusqu'à 160°C pour une polymérisation durant 30 heures sous pression. Toutes les opérations de bobinage ne présentent par ailleurs aucune difficulté particulière, puisque réalisées à l'aide de techniques connues d'enroulement filamentaire.

Le composite filamentaire à matrice thermodurcissable, constituant la couche 1, se trouve donc polymérisé entre les deux peaux que constituent les couches 2 et 4 réalisées en composite à matrice thermoplastique. Cette polymérisation en enceinte close, présente l'avantage de conserver à la structure du tube, un taux de résine important et très favorable au vieillissement en ambiance marine.

L'invention s'applique d'une façon générale, à la réalisation de tout tube nécessitant la superposition et la liaison efficace d'une couche de matériau dit "thermoplastique" sur un matériau thermodurcissable.

## Revendications

1. Tube en matériau composite constitué d'une couche interne en matériau thermoplastique et d'une partie structurale en fibres enrobées de matrices thermodurcissables jouant le rôle de liant, caractérisé en ce que la partie structurale tubulaire (1) à liant thermodurcissable est pourvue :
- d'un premier revêtement interne (2) en matériau composite fibré à liant thermoplastique dont les fibres d'interface sont étroitement liées par polymérisation au liant de la partie thermodurcissable de cette partie tubulaire, et
- au-dessous de ce premier revêtement interne, d'un second revêtement interne supplémentaire (3) en matériau thermoplastique constitué de polyamide pur, soudé au liant thermoplastique dudit premier revêtement interne.

2. Tube en matériau composite selon la revendication 1, caractérisé en ce que la partie structurale tubulaire (1) à liant thermodurcissable est pourvue d'un revêtement extérieur (4) en matériau composite fibré à liant thermoplastique dont les fibres d'interface sont étroitement liées par polymérisation au liant de la partie thermodurcissable de cette partie tubulaire.

3. Procédé de fabrication d'un tube en matériau composite selon la revendication 1, caractérisé en ce qu'il consiste à effectuer sur un mandrin tubulaire (5) un enrubannage de film de polyamide (3) suivi d'un bobinage de fibres (2) imprégnées d'une matrice polyamide thermoplastique en assurant un chauffage pour le soudage de la matrice, puis à effectuer à température ambiante au-dessus de cette couche un bobinage d'une partie structurale (1) en fibres et résine thermodurcissables, et enfin à assurer la polymérisation en température de la matrice thermodurcissable par mise en étuve de l'ensemble.

4. Procédé selon la revendication 3, caractérisé en ce qu'on chauffe les fibres (2) préalablement enduites de résine thermoplastique, au fur et à mesure de leur enroulement sur le mandrin (5), lui-même chauffé et entraîné en rotation par une machine tournante.

## Claims

1. Tube of composite material composed of an inner layer of thermoplastic material and of a structural portion of fibres coated with thermosetting matrixes acting as a binder, characterised in that the tubular structural portion (1) with a thermosetting binder is provided with:
- a first inner coating (2) of a fibrous composite material with a thermoplastic binder the interface fibres of which are closely bonded by polymerisation to the binder of the thermosetting portion of the tubular portion, and
- below this first inner coating, a second, additional inner coating (3) of thermoplastic material constituted by pure polyamide, welded to the thermoplastic binder of the said first inner coating.

2. Tube of composite material according to claim 1, characterised in that the tubular structural portion (1) with a thermosetting binder is provided with an outer coating (4) of fibrous composite material with a thermoplastic binder the interface fibres of which are closely bonded by polymerisation to the binder of the thermosetting portion of the tubular portion.

3. Method for manufacturing a tube of composite material according to claim 1, characterised in that it consists in winding on a tubular mandrel (5) a polyamide film (3) following by a winding of fibres (2) impregnated with a thermoplastic polyamide matrix, heating being provided for the welding of the matrix, then winding a structural portion (1) of fibres and thermosetting resin at ambient temperature over this layer and, finally, carrying out the polymerisation at temperature of the thermosetting matrix by stoving the assembly.

4. Method according to claim 3, characterised in that the fibres (2) previously coated with thermoplastic resin are heated as they are wound onto the mandrel (5), which is itself heated and driven in rotation by a rotary machine.

## Patentansprüche

1. Rohr aus Verbundwerkstoff, das aus einer inneren Schicht aus thermoplastischem Material und einem strukturellen Teil aus Fasern gebildet ist, die von warmaushärtenden Matrizen eingehüllt sind, welche die Rolle eines Bindemittels spielen, dadurch gekennzeichnet, daß der rohrförmige, strukturelle Teil (1) mit warmaushärtendem Bindemittel versehen ist
- mit einer ersten inneren Beschichtung (2) aus faserigem Verbundwerkstoff mit thermoplastischem Bindemittel, deren Grenzschichtfasern durch Polymerisation mit dem Bindemittel des warmaushärtenden Teils dieses rohrförmigen Teils eng verbunden sind, und
- unterhalb dieser ersten inneren Beschichtung mit einer zusätzlichen, zweiten inneren Beschichtung (3) aus thermoplastischem, aus reinem Polyamid gebildetem Material, die mit dem thermoplastischen Bindemittel der ersten inneren Beschichtung verschweißt ist.

2. Rohr aus Verbundwerkstoff nach Anspruch 1, dadurch gekennzeichnet, daß der rohrförmige strukturelle Teil (1) mit warmaushärtendem Bindemittel mit einer äußeren Beschichtung (4) aus faserigem Verbundwerkstoff mit thermoplastischem Bindemittel versehen ist, deren Grenzschichtfasern durch Polymerisation mit dem Bindemittel des warmaushärtenden Teils dieses rohrförmigen Teils eng verbunden sind.

3. Verfahren zur Herstellung eines Rohres aus Verbundwerkstoff nach Anspruch 1, dadurch gekennzeichnet, daß es daraus besteht, auf einer rohrförmigen Wickelhülse (5) eine Bandumwicklung aus einem Polyamidfilm (3) durchzuführen, gefolgt von einer Bewicklung mit Fasern (2), die mit einer thermoplastischen Polyamidmatrix imprägniert sind, wobei eine Erwärmung für das Verschweißen der Matrix erfolgt, dann bei Umgebungstemperatur oberhalb dieser Schicht eine Bewicklung mit einem strukturellen Teil (1) aus warmaushärtenden Fasern und Harz durchzuführen und schließlich die Polymerisation bei der Temperatur der warmaushärtenden Matrix durch Verbringen des Komplexes in einen Trockenofen zu bewirken.

4. Verfahren nach Anspruch 3, dadurch gekennzeichnet, daß die zuvor mit thermoplastischem Harz überzogenen Fasern (2) im gleichen Maße wie ihre Wicklung auf der Wickelhülse (5) erwärmt werden, die selbst erwärmt und durch eine sich drehende Maschine in Rotation versetzt wird.
